# EUROPEAN PATENT APPLICATION

(11) **EP 0 874 311 A1**
(43) Date of publication of application: **28.10.1998**
(21) Application number: 97102434.4
(22) Date of filing: 14.02.1997
(51) Int. Cl.: G06F 9/455, H04Q 3/545

(54) **A realtime switching system**

(71) Applicant: SIEMENS AKTIENGESELLSCHAFT, 80333 München (DE)
(72) Inventor: Eggers, Harald, Dr. rer. nat., 85256 Vierkirchen (DE); Heim, Roland, Dr. rer. nat., 81241 München (DE); Kleber, Ulrich, 80686 München (DE); Döllinger, Carl-Heinz, 82110 Germering (DE)

(57) **Abstract**

A realtime switching system with a software platform comprising proprietary system software and proprietary system software interfaces. An opening up of the software platform for third-party software is performed in such a way that the proprietary system software and also application software are maintained unchanged while the third-party software is running in parallel to the proprietary software via standard software interfaces.

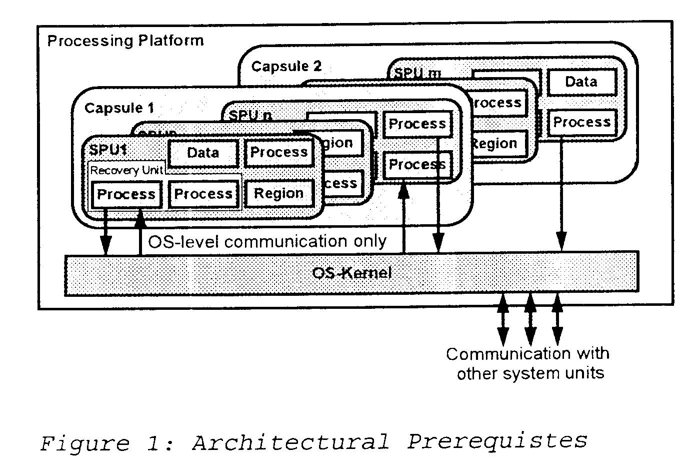

## Description

### Introduction

Large core switches are proprietary systems mainly because commercially available systems don't meet all the stringent real-time and nonstop computing requirements. Furthermore, a proprietary development gives full control over all vital system components with respect to performance, fault tolerance, product life cycles and field support.

A disadvantage of proprietary systems is that it's difficult or even impractical to incorporate third party SW or to get benefits from a cooperation where the synergy effect of a common development platform can lower costs and improve time to market.

The rapid evolution of technology, regulatory changes, and many new operators and service providers makes it increasingly difficult to cover all technologies needed and to be able to provide a sufficiently wide product spectrum.

An often used approach to take more business opportunities is to enter an alliance where the partners complement each other with respect to technological competence, market shares etc.

Thus primary motivation for opening up the SW platform is the alliance with a long term cooperation partner to target the ATM switch market.

The goal of opening up the software platform as described in the paper is
- Re-use already implemented SW to lower costs and to improve time to market,
- Keep the advantages of the current proprietary architecture:
   - high and scaleable performance,
   - high reliability and fault tolerance,
- Converge to a common software platform for future joint developments,
- Prepare the system for the incorporation of more commercially available SW in the future.

As a long term perspective, the Open Real-time Distributed Platform (ORDP) will allow to incorporate more commercially available third party SW and to migrate to more industry standard based components.

The paper starts with a summary on how our existing software architecture facilitates the opening up, then it addresses some alternatives and discusses in some more detail the chosen implementation.

### Software Architecture

### Prerequisites

The concept of the Open Real-time Distributed Platform is based on the software architecture of our current ATM and narrowband switches [1], [2]. In this architecture the software is structured by the software container classes Service Provision Unit (SPU) and capsule, to allow a flexible distribution of functional units over a network of processors. The top down hierarchy of the software container classes is as follows.

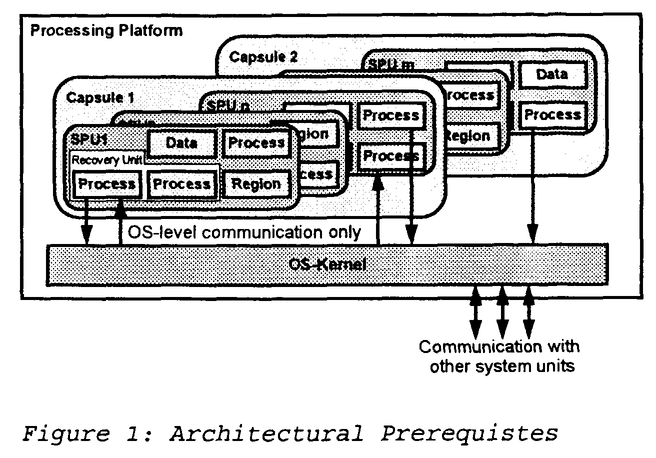

Each hardware processing platform contains one or more capsules, capsules may be replicated on other hardware platforms.

A capsule contains a collection of Service Provision Units. A capsule defines an own virtual address space and allocates a guaranteed subset of the total available processing resources, i.e. for each capsule, the processing resources are protected against requests from other capsules. Capsule contents are defined at build time according the definition of SPUs which have related functions and therefore a related cumulative need of resources.

The SPU is constructed of processes, data, regions, and procedures, all defined in CHILL modules and provides the designer with a larger and more functional container than for example a process. Importantly an SPU communicates with other SPUs only via OS-level communication, i.e. the SPU enforces communication integrity. Additionally, an SPU may define recovery units, a set of processes which can be re-started by the operating system without affecting the execution of other software.

The application software is structured as a collection of SPUs interacting as clients and servers, which are distributed over a network of processors. As SPUs are replicated on several processors there will normally be more than one SPU that can provide a specific service. Therefore a particular operating system function, Service Addressing, is used to set up the communication between two SPUs at run time. Subsequently both SPUs communicate via message passing or via remote procedures.

The service interfaces of an SPU provide location transparency: At build time the SPU may be relocated to another capsule or another hardware platform without any changes in the source code of the relocated SPU or its interface partners. This loosely coupled communication increases fault tolerance and in addition supports load balancing and software upgrades.

### Idea

ORDP evolves this concept of capsules and location transparency by defining capsules with different characteristics. A set of capsules will be called a personality if these capsules have the same characteristics. Characteristics here means that personalities may define e.g. an own operating system interface, internal structures, programming language, or even an own software ware maintenance and recovery strategy. However all personalities of a system will also have common characteristics.

Where adding of capsules does not affect the base software, defining a personality means defining a complete programming and runtime-environment. Therefore a system will only contain a very small number of personalities.

To meet the goal of a smooth opening of the software platform, a personality will always define an own operating system interface, and will always be well decoupled from the other personalities by using exclusively message-based communication to applications of another personality, by an own virtual address space (or a set of own virtual address spaces), a separate resource management or special functions to de-couple resources, and an independent recovery strategy (for its local recoveries). Additionally it may define an own operating system interface (API) or a different programming language leading to a different software structure.

ORDP implements two personalities: in addition to the existing CHILL personality there will be a C personality which supports the cooperation by implementing a programming and runtime-environment similar to the partner*'*s software platform within our switch.

The C-personality implements its own operating system API, providing the same system calls as available to applications in the partner*'*s environment. This API is completely part of the C-personality. On the other side the CHILL-API already exists, and therefore there will be no fixed border-line between the API of the CHILL personality and the underlying OS-kernel functions. This leads to an a-symmetric architecture, but thus supports best the smooth migration from the proprietary CHILL system to an open architecture.

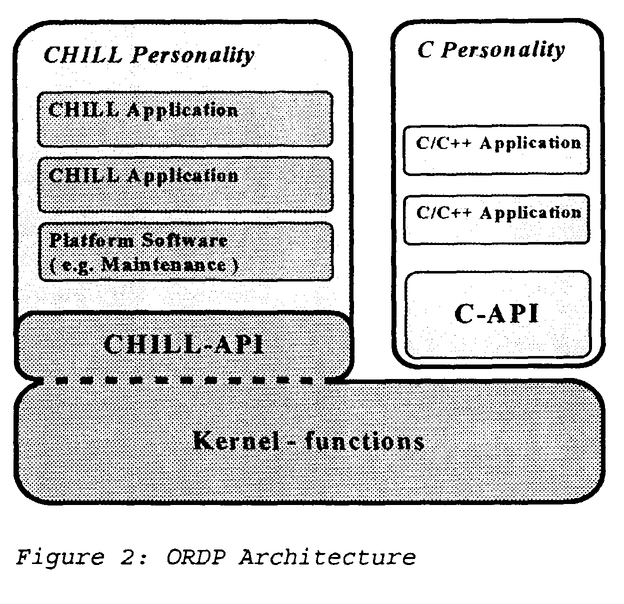

In the distributed platform of a large system configuration the C-personality will not be available on all hardware platforms. The CHILL personality must be available on all platforms (except peripheral controllers), e.g. because it contains the existing software for hardware maintenance. However the number of applications in the CHILL personality (or the number of capsules) may vary between the platforms.

### Alternatives

### Heterogenous Cluster:

A straightforward approach to incorporate C/C++-SW would be to run this SW on a dedicated C-platform implemented in C/C++, but this has some major disadvantages:
- Larger HW-costs for small systems, where always a minimum of two platforms would be necessary.
- All central SW components which high performance and nonstop call processing is based upon had to be re-implemented in C (e.g. internal communication protocols, OA&M, error reporting and recovery, SW upgrade without service interruption).
- More overhead as all C/CHILL communications had to be done across platform boundaries.

For a solution where both a CHILL and C/C++ environment has to be provided on the same HW platform we have investigated various implementation alternatives.

### Standard operating System:

- Use an existing UNIX/POSIX multiple personality SW platform based on a micro-kernel technology and translate all CHILL SW to this environment.
   An automatic translation of complex proprietary CHILL language extensions into C/C++ seems not to be feasible. All CHILL semantics had to be preserved, and the existing CHILL components are already capable of communicating with peripheral controllers programmed in C. Therefore, there wouldn't be any added value.
- Use an existing UNIX/POSIX multiple personality SW platform based on a micro-kernel technology and add a CHILL personality to it.
   This approach has been ruled out because we don't see any UNIX applications on a ATM core switch (of course, there are many UNIX applications in the net, e.g. for IN) in the mid-term and the future of UNIX isn*'*t clear yet. Furthermore, commercial platforms don't meet the stringent nonstop computing requirements of a core switch and using them would require expensive adaptations (File System, Database, Maintenance).

### Commercial Micro Kernel:

- Take only a commercially available micro-kernel to facilitate the C-runtime layers in combination with existing basic system components.
   To investigate this approach, a feasibility study has been carried out. It revealed as main disadvantage a 15% BHCA performance loss. A kernel modification to optimize it makes no sense as this would create a proprietary variant.

### Benefits of ORDP approach:

Besides the points listed above, a general problem with commercial basic SW components is the mismatch problem with respect to
- market focus as they are primarily designed for server and desktop applications and don't meet the stringent requirement of a core node,
- life cycles as server and desktop applications have shorter life cycles than infrastructure equipment.

Thus the preferred concept is to provide a SW platform with various personalities, i.e. with various application programming interfaces (APIs), on top of the proprietary CHILL operating system kernel. More specifically, the goal is to implement a CHILL API for existing and newly written CHILL-SW and a C/C++ API which provides all means to run software common to a partner*'*s programming standards.

The C personality extension will be based entirely upon existing software components, particularly we decided to use the existing proprietary File system and database management system (DBMS) as used in existing software versions.

The File System supports the proprietary concepts for upgrade, SW management, transaction and Log control and is fully integrated in the start up and recovery strategies.

DBMS supports data distribution and downloading to other platforms according to the HW and SW architecture and, as the file system does, upgrade and SW management.

The decision to port our partner*'*s operating system interface on top of the existing proprietary operating system kernel can be summarized as follows:
- we keep the strength of our software platform as being a scaleable, fault tolerant platform,
- no performance loss for CHILL - CHILL inter-process communication,
- less technical risks,
- no license fees to pay,
- no adverse impact a third partner possibly could have on our tight schedules.

### Implementation

In the following we want to show some aspects of such an implementation, of which some may be special to our alliance. Here the first step very much focuses on joint development with a partner.

So the architecture is based on the existing SW structure and shows from the operating system*'*s point-of-view a C-personality like a large capsule with specific attributes. There are some new system calls for the C-personality, but mainly the C-personality can use the same kernel functions, just with a C-like interface. CHILL capsules can run unchanged.

Within the C-personality the run-time environment is the same as in our partner*'*s switch. This could easily be achieved by a ported version of our partner*'*s operating system shell, using the CHILL operating system calls instead of the original function calls of a standard operating system kernel.

### Interfaces between Languages

In an environment with multiple programming languages with complex interfaces it is a very important task to guarantee that the interface definitions are correct, i.e. the interface partners use the same parameters in the same layout. For interfaces between switches (and also some interfaces within the switch) this is solved using ASN.1 definitions, but for ORDP there is an additional goal. There exist a large number of interfaces already defined in CHILL, which now must be used by C applications, and we expect in the future also interfaces already defined in C language, which shall be used in a multiple language system. For those it is not feasible to translate them to ASN.1, the ASN.1 compiler generating the correct CHILL and C definitions.

ORDP in the first step supports ASN.1 definitions, and additionally introduces tool support for compilation of CHILL definitions to C header-files. ASN.1 definitions can be compiled to C via CHILL. For interfaces already defined in C tool support will be necessary in future steps.

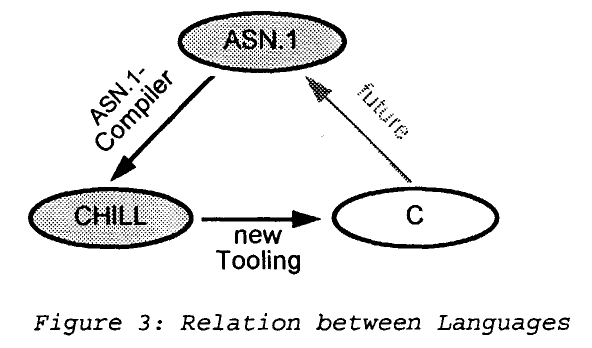

Additionally the interface support evolves from the existing principle, that global interfaces (interfaces between service provisioning units) are defined in own source modules. Based on these sources a global interface library is generated.

All C-CHILL interfaces are global interfaces, because a service provisioning unit cannot be part of two personalities. They are defined in CHILL sources and are part of the global interface library. Additionally in the CHILL sources the interfaces to C are marked with a special option. The tooling can now generate the C header-files from the global interface library. Production of the C-personality then is based on these header-files.

### Communication

A very interesting aspect of the ORDP concept is the communication between the personalities.

### ORDP architecture leads to communication architecture.

Communication between the personalities must be supported by the layer which connects the personalities, which is on the operating system kernel level. Since the existing operating system is not split into an API and a kernel, the communication within the CHILL personality is not dynamically affected by the new concept. However, the C-personality now uses the existing kernel for communication to CHILL and it also uses it for C-internal communication in order to achieve a fast implementation and simple software structure.

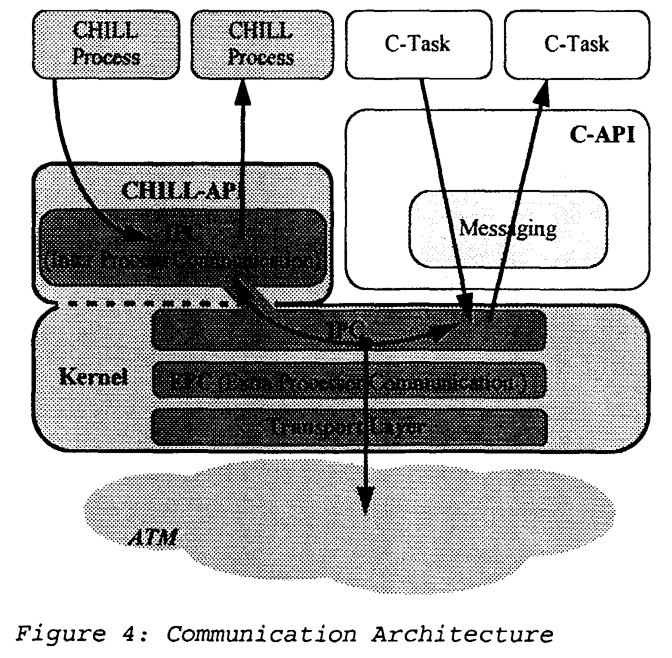

Using this communication architecture the C-personality can use the CHILL kernel functionality for platform-external communication without any additional effort. However, the messaging system of the C-API must support multiple platforms in its architecture and syntax.

### Service Addressing

Service Addressing in the existing system already hides the location of a service from its client. With ORDP this refers not only to the processing platform of the service, but also to its personality. With the service definition (during implementation phase) the personality of a service is defined. When the service announces itself (during execution time or statically during software production) service addressing validates the platforms, the service is running on. This is done in the same way for both personalities.

When a client calls a service, it must use the syntax and semantics of its - the clients - own personality, but in both cases the service is selected by symbolic values, for both, the service and its platform. This is done using a system call to connect the service, which returns a dynamically generated indirect address value, to be used in subsequent messaging primitives.

### Syntax / Semantics of Communication Primitives

Normally in the different personalities the system calls will be different not only with respect to their syntax but also in their semantics (otherwise it would be easy to open the platform by translating the system calls one-to-one).

In the case of communication primitives we experienced such differences mainly for accessing the message contents, but also for standard message contents (such as source, destination, job-codes), message categories (sizes), message kinds (request, response, reject, ..), and for the handling of synchronous communication.

Differences in accessing the message contents can easily be handled by the personalities*'* messaging interface. For example one personality may allow composing a message in a user data field, the other may use access procedures and parameters of the send primitives. This is also possible for message kinds, which in one case lead to different send primitives (send-request, send-reject), in the other be a user-specific component of the message contents. Message sizes are also mapped to transport categories by the personalities*'* messaging system. However, the kernel must be able to handle the maximum message size of all personalities. More difficult is the handling of standard message contents - normally then put in a message header, and the handling of synchronous communication.

### Message Headers

Different layout of the message headers can easily be handled by the personalities*'* messaging interface, but in some cases applications of personality A will not supply components which are necessary in the message header for personality B. To meet the goal of ORDP this application shall run unchanged. That is it will supply the message header as necessary in its own personality (A). The messaging interface (of personality A or B) detects the missing values and supplies dummies. However the application*'*s interface partner (in personality B) must handle the dummy-values.

This is no major problem, for in any case it will not be possible to run two applications in different personalities *both* unchanged. The messaging protocol on application level must be adapted, too, so at least one of the applications must slightly be changed.

### Synchronous Communication

The existing CHILL-personality provides a compiler-supported remote procedure (RPC) interface, which hides the messaging completely from the application. The C-personality on the other side provides a synchronous messaging primitive, meaning that the application composes and sends a message and with the same system call receives the response. This difference in semantics leads to the following possibilities in ORDP.
1.CHILL defines a message-based service. This service may be called from the C-personality both synchronously and a-synchronously.
2.CHILL defines an RPC-based service. The adaptation of the procedure to the underlying messaging protocol then is done completely by the CHILL compiler and operating system. The C-personality can call this service by sending a message with the correct layout, but this must be done without language support. But it is even possible to call the service a-synchronously by sending that message, proceeding with another task and receiving the response at a later time.
3.C defines a service; it will be defined message-based, since there is no compiler support to export the service as an RPC. CHILL may call it both synchronously and a-synchronously. If it is necessary to call it via a procedure interface, the CHILL personality must define a procedure, sending and receiving the necessary messages, thus doing the same as the CHILL compiler does for CHILL remote procedures.

### Handling of Software Errors

Because of its fundamental importance for the network operator and the customer, reliability and fault tolerance must be reflected already in the architecture and the design of a telecommunication system. This is in particular true for large systems with many subscribers or for systems offering services with high bandwidth. To ensure that third party software does not degradate the high reliability and fault tolerance of our proprietary system, the following principles are applied to the design of the ORDP:
(1) The impact of a software error must be limited to the own personality whenever possible.
(2) The impact of the corresponding error neutralization must also be limited to the own personality whenever possible.

Rule (1) results from both personalities executing in different virtual address spaces and working with separated protected budgets of processing resources. In addition a real-time supervision mechanism in the OS kernel takes care that errors in the real-time behavior of one personality do not block the execution of the other personality.

Rule (2) has to be ensured by appropriate software error treatment (SWET) and recovery mechanisms. For exceptions in the CHILL personality or the OS kernel, the existing SWET concept is maintained. If an exception occurs within the C personality, control is given to SWET to save symptom data and to issue a recovery of the C personality.

Within each personality SWET offers interfaces to the application to report software errors. As in other functional blocks of the ORDP, the interfaces to CHILL applications remain unchanged. The interfaces in the C personality have the same syntax as in our partner*'*s environment. Most of these calls are mapped to the existing calls for error reporting. However, unlike the existing CHILL applications, the software in the C personality is allowed to 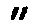 panic", which immediately causes a saving of error symptoms and a subsequent recovery.

For the ORDP the new concept of a personality recovery is introduced. The personality recovery is based on the concepts of recovery units within an SPU. The whole C personality is treated as one big recovery unit, i.e. the C personality is re-started while the CHILL personality continues to execute. From the perspective of a CHILL application the effect is the same as if an interface partner on a different hardware platform is recovered. Since all existing CHILL applications support the principle of location transparency, this poses no additional restrictions on the existing CHILL software.

However, the size of the C personality exceeds the normal limit of recovery units. Therefore its performance must be improved by special features in the resource management: Resources of the C personality are managed separately to optimize their release during a personality recovery.

The recovery strategy within the C personality is de-coupled from the local recoveries within the CHILL personality. As a consequence, an isolatable failure in the C personality can be neutralized without affecting the execution of the CHILL applications. In addition, the recovery escalation strategy contains also higher recovery levels which will re-start all personalities of a given hardware platform, e.g. to neutralize a severe error in the OS kernel.

### Embedding of File Control Software and Database

Major benefits of the existing system are based on the functionality of its file system and database. The file system supports the upgrade concept, software management, transaction and log control and is fully integrated in the start-up and recovery strategies. The database supports the scaleable distributed system by data distribution and downloading to other platforms. Therefore it is not advisable to open the platform by using a standardized database or file system.

ORDP uses the existing database and file system, even in the C-personality. Applications access the database and file system by a personality-specific API:

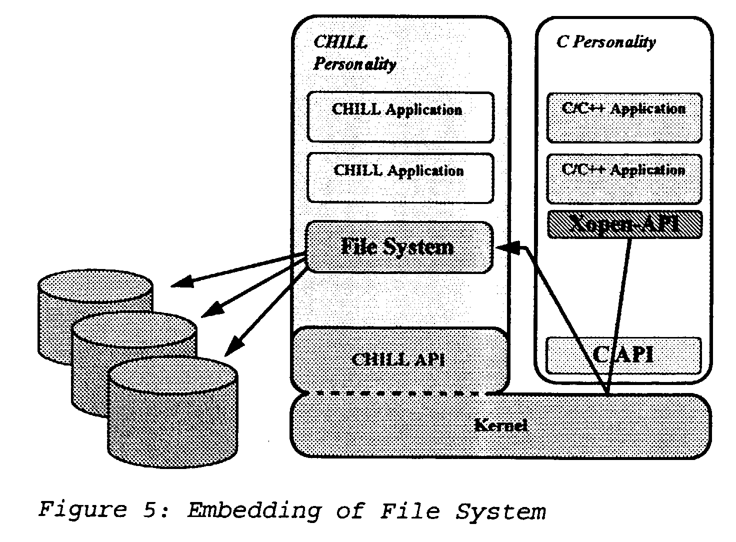

The C-API of the file system follows standards, e.g. X-open and thus allows porting of C-applications with minimal changes.

The resource-management and recovery-strategy of the file system are based on special functions which are not available in the C-personality. Therefore the C-API cannot use the file system like a CHILL process does. The C-API is connected to the CHILL part by a C/CHILL mapping process which is part of the CHILL personality, and so may use those functions. However the protocol between mapping process and C-API is proprietary.

Embedding of the database is very similar, but here no mapping process is necessary. Besides it is not possible to support the database functionality for the distributed system by a standardized C-API. So here an application must be changed to use the database functions for a distributed system.

### Conclusion

The concept of the Open Real-Time Distributed Platform provides a smooth migration from a proprietary system to an open architecture where the existing proprietary software can be reused without changes. This architecture opens our switches for the integration of third party products and for the cooperation with other system suppliers. The typical advantages of proprietary systems - scaleable performance and high reliability and fault tolerance - are maintained with the ORDP concept. A special advantage of the presented architecture is that the opening up of the software platform is possible without dynamic impacts on the already existing application software.

### References

[1] Hoogendoorn, C. H.; Maher A. T.: Enhanced SW Architecture for an ATM universal communication node, Proceedings of the XIV International Switching Symposium, Yokohama 1992
[2] Eggers, H.: Software Technology for a Distributed Telecommunication System, Software Engineering - ESEC 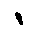 93, Springer Lecture Notes in Computer Science 717, pp. 211 - 225

## Claims

1. A realtime switching system with a software platform comprising proprietary system software and proprietary system software interfaces,
**characterized**,
that an opening up of the software platform for third-party software is performed in such a way that the proprietary system software and also application software are maintained unchanged while the third-party software is running in parallel to the proprietary software via standard software interfaces.
